# EUROPEAN PATENT APPLICATION

(11) **EP 4 471 959 A1**
(43) Date of publication of application: **04.12.2024**
(21) Application number: 23176599.1
(22) Date of filing: 01.06.2023
(51) Int. Cl.: H01M 50/325, H01M 50/342, H01M 50/30

(54) **ASSEMBLY SET FOR VENTING UNIT FOR VENTING ELECTRONICS HOUSING**

(71) Applicant: MANN+HUMMEL GmbH, 71636 Ludwigsburg (DE)
(72) Inventor: PLOPPA, Martin, 71636 Ludwigsburg (DE)
(74) Representative: Mann + Hummel Intellectual Property

(57) **Abstract**

The invention relates to an assembly set for a venting unit (100) for venting an electronics housing, the assembly set comprising a housing (10) comprising a base body (12) with an inner opening (14), the base body (12) comprising fixation means (13) for connecting to a pressure compensation and/or degassing opening of the electronics housing, and an inlet (30) configured to be inserted in the inner opening (14) and covering the inner opening (14) in a water-tight manner, the inlet (30) comprising an inlet body (32) with an inlet opening (34) covered by means (35) for pressure compensation and/or degassing of the electronics housing. The housing (10) further comprises a receptacle (16) configured as an interface for the inlet body (32). The inlet body (32) comprises a corresponding counter-receptacle (40) configured to be connected to the receptacle (16).

## Description

### Technical Field

The invention relates to an assembly set for a venting unit for venting an electronics housing, in particular a battery housing, as well as to a housing for an assembly set for a venting unit, an inlet for an assembly set for a venting unit and a venting unit.

### Background Art

Housings for electronic components such as battery cells and the like cannot be sealed completely gas-tight against the environment, because due to temperature fluctuations (e.g. due to heat input from charging and discharging of battery cells) and naturally occurring air pressure fluctuations, especially in the case of mobile systems, gas exchange between the interior and the exterior space must be made possible in order to avoid inadmissible mechanical stresses on the housing, in particular bursting or bulging of the housing. However, it is equally important that the ingress of foreign bodies, foreign particles, dirt and moisture in the form of liquid water is prevented.

Pressure equalization devices are therefore known which have membranes that are permeable to gas but impermeable to liquid.

if a pressure peak occurs within the housing, for example in the event of failure of a battery cell in a battery housing, this pressure must be relieved as quickly as possible, otherwise the housing could be damaged.

WO2023030765A1 discloses a degassing unit for a battery housing, in particular for a traction battery of a motor vehicle, which can be connected in a fluid-tight manner to a rim of a pressure equalization opening of the battery housing. It has a base body which has at least one fastening means action area set up for fastening the degassing unit to the battery housing and which has a gas passage opening. The gas passage opening is covered by a membrane, which is overlapped on the side of its inner surface by at least one fluid-permeable membrane support device. The membrane is attached by a material bond to a membrane support which is separate from the main body and is sealed around the gas passage opening in a fluid-tight manner relative to the base body around the gas passage opening and is connected to the base body in such a way that a relative mobility of the membrane support and the base body is prevented at least in the axial direction. The membrane support is connected to the main body by a reversibly releasable fastening device with the main body.

DE102021003923A1 discloses a valve for pressure compensation and/or emergency venting of a container, preferably of a housing of a vehicle battery, with at least one retaining element and at least one piston element, which can be moved from a sealing position into a release position against the force of at least one energy store. The retaining element and the piston element have interengaging receptacles between which the energy store is accommodated.

It is an object of the invention to provide a modular assembly set for a venting unit for venting an electronics housing, in particular a battery housing.

It is a further object of the invention to provide a housing for an assembly set for a venting unit.

It is a further object of the invention to provide an inlet for an assembly set for a venting unit.

It is a further object of the invention to provide a venting unit for venting an electronics housing, in particular a battery housing.

According to an aspect of the invention, the object is achieved by an assembly set for a venting unit for venting an electronics housing, in particular a battery housing, the assembly set comprising a housing comprising a base body with an inner opening, the base body comprising fixation means for connecting to a pressure compensation and/or degassing opening of the electronics housing, and an inlet configured to be inserted in the inner opening and covering the inner opening in a water-tight manner, the inlet comprising an inlet body with an inlet opening covered by means for pressure compensation and/or degassing of the electronics housing. The housing further comprises a receptacle configured as an interface for the inlet body, and the inlet body comprises a corresponding counter-receptacle configured to be connected to the receptacle.

According to a further aspect of the invention, the further object is achieved by a housing for an assembly set for a venting unit for venting an electronics housing, in particular a battery housing, the housing comprising a base body with fixation means for connecting to a pressure compensation and/or degassing opening of the electronics housing, wherein the base body comprises an inner opening for gas passage, and wherein the base body comprises a receptacle configured as an interface for an inlet body of an inlet to be arranged in the inner opening.

According to a further aspect of the invention, the further object is achieved by an inlet for an assembly set for a venting unit for venting an electronics housing, in particular a battery housing, the inlet comprising an inlet body configured to be inserted in an inner opening of a base body of a housing and configured to cover the inner opening in a water-tight manner, wherein the inlet body comprising means for pressure compensation and/or degassing of the electronics housing, and wherein the inlet body comprises a counter-receptacle configured to be connected to a corresponding receptacle of the base body of the housing.

According to a further aspect of the invention, the further object is achieved by a venting unit for venting an electronics housing, in particular a battery housing, the venting unit being assembled from an assembly set for a venting unit for venting an electronics housing, in particular a battery housing, and the venting unit comprising a housing comprising a base body with an inner opening, the base body comprising fixation means for connecting to a pressure compensation and/or degassing opening of the electronics housing, and an inlet configured to be inserted in the inner opening and covering the inner opening in a water-tight manner, the inlet comprising an inlet body with an inlet opening covered by means for pressure compensation and/or degassing of the electronics housing, wherein the housing further comprises a receptacle configured as an interface for the inlet body, and wherein the inlet body comprises a corresponding counter-receptacle configured to be connected to the receptacle.

Advantageous embodiments are described in the dependent claims, the description and the drawings.

According to an aspect of the invention, an assembly set for a venting unit for venting an electronics housing, in particular a battery housing, is proposed, the assembly set comprising a housing comprising a base body with an inner opening, the base body comprising fixation means for connecting to a pressure compensation and/or degassing opening of the electronics housing, and an inlet configured to be inserted in the inner opening and covering the inner opening in a water-tight manner, the inlet comprising an inlet body with an inlet opening covered by means for pressure compensation and/or degassing of the electronics housing. The housing further comprises a receptacle configured as an interface for the inlet body. The inlet body comprises a corresponding counter-receptacle configured to be connected to the receptacle.

The proposed assembly set for a venting unit realizes a competitive market product kit of a venting unit for various applications. Advantageously it offers the possibility of separating the function of pressure compensation and emergency venting function or degassing. Smaller installation spaces need to be available with a venting unit assembled from the assembly set.

With the proposed assembly set interchangeable modular functional units, different semipermeable membranes or generally venting concepts can be mounted and/or installed in the same housing. Favorably the complex welding and leak testing of the semipermeable membrane can be done in advance on the inlet as a membrane support and no longer has to be carried out inside the housing.

Advantageously this results in a gain in flexibility due to interchangeability of the semipermeable membrane and/or the function and/or in a function separation of pressure compensation and degassing. Different semipermeable membranes and/or functions may be used with the same housing.

Production of identical parts, such as a support element may be facilitated, which results in simplification of the manufacturing process. Manufacturing of the venting unit may be possible with existing manufacturing equipment.

Favorably the component builds much smaller than existing concepts because production-related avoid zones, such as an area under the membrane weld may be used.

As a flexible solution for the customer different semipermeable membranes can be installed in the same housing. Advantageously different degassing pressures can be implemented in the electronics housing.

Advantageously, the proposed assembly set for a venting unit serves for manufacturing venting units under cost sensitive conditions.

According to a favorable embodiment of the assembly set, the receptacle of the base body may be a circumferential ring inside the inner opening, and the corresponding counter-receptacle of the inlet is a circumferential flange with a circumferential groove on an outer circumference of the inlet, the circumferential ring being configured to be received by the circumferential flange in an intended mounting position. Advantageously, the inlet may be mounted in a in a flexible way on the receptacle of the housing as a standardized interface between housing and inlet.

According to a favorable embodiment of the assembly set, the receptacle of the base body and the corresponding counter-receptacle of the inlet may be connected by welding, in particular spin welding. Thus, a flexible and cost efficient way of fixing the inlet to the housing may be achieved.

According to a favorable embodiment of the assembly set, the receptacle of the base body and the corresponding counter-receptacle of the inlet may be connected by bayonet fixation means. In particular, the assembly set may further comprise a seal arranged between the circumferential ring of the base body and the flange of the inlet. By this way the inlet may be interchangeable in a service process. Different inlet type may be used with the same housing by simply changing the inlet.

According to a favorable embodiment of the assembly set, the housing may be attached to the electronics housing bypass-through bushings. Thus, the venting unit may be mounted to an electronics housing, such as a battery casing, by fixing the housing to the electronics housing from an outside by mounting bolts.

According to a favorable embodiment of the assembly set, the housing may be attached to the electronics housing by bayonet fixation means. By this way, the venting unit may be mounted to the electronics housing in an easily interchangeable manner.

According to a favorable embodiment of the assembly set, the means for pressure compensation and/or degassing of the electronics housing may comprise a semipermeable membrane enabling passage of gaseous media from an environment into the electronics housing and from the electronics housing to the environment, but preventing passage of liquid media and solids. The semipermeable membrane enables passage of gaseous media from an environment into the electronics housing and from the electronics housing to the environment, but prevents passage of liquid media and solids. By this way a normal venting for balancing different atmospheric pressures between the environment and the electronics housing the venting unit is mounted to may be ensured without opening the valve closure plate. Thus, intrusion of dust particles, e.g., during venting, may be avoided.

The semipermeable membrane may be provided in the form of a microporous film, comprising in particular a fluoropolymer, in particular a polytetrafluoroethylene.

According to a favorable embodiment of the assembly set, the means for pressure compensation and/or degassing of the electronics housing further comprises a support element supporting the semipermeable membrane, the support element being arranged at the inlet body between the semipermeable membrane and the electronics housing. Advantageously, the support element may protect the membrane against water pressure from the environment, e.g. in a leakage test of the electronics housing. In particular, the support element may cover the inlet opening. Thus, the membrane may be supported over the entire inlet opening.

According to a favorable embodiment of the assembly set, the assembly set further comprises a protection cover arranged at an outer side of the inlet body. Thus, the semipermeable membrane may be protected against mechanical pressure or damage by particles from the environment.

According to a favorable embodiment of the assembly set, the inlet body further comprises a spike element arranged at the inlet body on an outer side of the semipermeable membrane, the spike element being configured to rupture the semipermeable membrane in case of an excessive overpressure inside the electronics housing. By this way, emergency degassing, in particular, under a considerable gas pressure inside the electronics housing, e.g. by failure of battery cells, may be facilitated.

According to a favorable embodiment of the assembly set, the means for pressure compensation and/or degassing of the electronics housing may comprise a burst cover covering the inlet opening, the burst cover being configured to open a gas passage in case of an excessive overpressure inside the electronics housing. The burst cover being removed, e.g. by a high gas pressure, a larger cross section for degassing is available for rapid depressurization inside the electronics housing, in particular inside a battery housing.

According to a favorable embodiment of the assembly set, the semipermeable membrane may be arranged at the burst cover. Thus, a venting unit which serves for both functions, pressure compensation and degassing, may be achieved in a flexible way. Advantageously, the burst cover and the semipermeable membrane may be manufactured as one component and pretested before mounting to the inlet and the venting unit.

According to a favorable embodiment of the assembly set, the semipermeable membrane may be arranged at a cover opening of the burst cover. In particular, a protection cover may be arranged on an outer side of the semipermeable membrane. Advantageously, the burst cover and the semipermeable membrane may be manufactured as one component and pretested before mounting to the inlet and the venting unit. The protection cover protects the membrane against particles and/or mechanical damage from the environment.

According to a favorable embodiment of the assembly set, the means for pressure compensation and/or degassing of the electronics housing may comprise a first valve for gas passage into the electronics housing, a second valve for gas passage out of the electronics housing and a semipermeable membrane arranged between the outer side of the inlet body and the first valve and a second valve. In particular, the first valve and the second valve may be mushroom valves. Advantageously, the first valve may open if the air pressure in the environment is higher than the air pressure inside the electronics housing and the second valve may open if the air pressure in the environment is lower than the air pressure inside the electronics housing. Entrance of water may be prevented by the semipermeable membrane.

According to a favorable embodiment of the assembly set, the means for pressure compensation and/or degassing of the electronics housing may comprise a second valve for gas passage out of the electronics housing, the second valve being biased against the inlet body with a spring element. In particular, the second valve may be sealed against the inlet body by a circumferential seal. Thus, the second valve may open only for degassing if the pressure inside the electronica housing exceeds a certain limit defined by the spring constant of the spring element. Then a large cross section may be used for degassing. Pressure compensation of the venting unit may be achieved by the circumferential seal which may be flexible in a low pressure range with the second valve closed.

According to a further aspect of the invention, a housing for an assembly set for a venting unit for venting an electronics housing, in particular a battery housing, is proposed, at least comprising a base body with fixation means for connecting to a pressure compensation and/or degassing opening of the electronics housing. The base body comprises an inner opening for gas passage. The base body comprises a receptacle configured as an interface for an inlet body of an inlet to be arranged in the inner opening.

With the proposed housing interchangeable modular functional units, different semipermeable membranes or generally venting concepts can be mounted and/or installed in the same housing. Favorably the complex welding and leak testing of the semipermeable membrane can be done in advance on the inlet as a membrane support and no longer has to be carried out inside the housing.

Advantageously the housing offers the possibility of separating the function of pressure compensation and emergency venting function or degassing by mounting different inlets to the same housing. Smaller installation spaces need to be available with a venting unit assembled from the assembly set.

Production of identical parts, such as a support element may be facilitated, which results in simplification of the manufacturing process. Manufacturing of the venting unit may be possible with existing manufacturing equipment.

According to a further aspect of the invention, an inlet for an assembly set for a venting unit for venting an electronics housing, in particular a battery housing, is proposed, at least comprising an inlet body configured to be inserted in an inner opening of a base body of a housing and configured to cover the inner opening in a water-tight manner, comprising means for pressure compensation and/or degassing of the electronics housing. The inlet body comprises a counter-receptacle configured to be connected to the corresponding receptacle of the base body of the housing.

With the proposed inlet interchangeable modular functional units, different semipermeable membranes or generally venting concepts can be mounted and/or installed in the same housing. Favorably the complex welding and leak testing of the semipermeable membrane can be done in advance on the inlet as a membrane support and no longer has to be carried out inside the housing.

Advantageously the inlet offers the possibility of separating the function of pressure compensation and emergency venting function or degassing by mounting different inlets to the same housing. Smaller installation spaces need to be available with a venting unit assembled from the assembly set.

Production of identical parts, such as a support element may be facilitated, which results in simplification of the manufacturing process. Manufacturing of the venting unit may be possible with existing manufacturing equipment.

According to a further aspect of the invention, a venting unit for venting an electronics housing, in particular a battery housing, assembled from an assembly set for a venting unit for venting an electronics housing, in particular a battery housing, is proposed, at least comprising a housing comprising a base body with an inner opening, the base body comprising fixation means for connecting to a pressure compensation and/or degassing opening of the electronics housing, and an inlet configured to be inserted in the inner opening and covering the inner opening in a water-tight manner, the inlet comprising an inlet body with an inlet opening covered by means for pressure compensation and/or degassing of the electronics housing. The housing further comprises a receptacle configured as an interface for the inlet body. The inlet body comprises at least one corresponding counter-receptacle configured to be connected to the receptacle.

With the proposed venting unit interchangeable modular functional units, different semipermeable membranes or generally venting concepts can be mounted and/or installed in the same housing. Favorably the complex welding and leak testing of the semipermeable membrane can be done in advance on the inlet as a membrane support and no longer has to be carried out inside the housing.

Advantageously the venting unit offers the possibility of separating the function of pressure compensation and emergency venting function or degassing by mounting different inlets to the same housing. Smaller installation spaces need to be available with a venting unit assembled from the assembly set.

Production of identical parts, such as a support element may be facilitated, which results in simplification of the manufacturing process. Manufacturing of the venting unit may be possible with existing manufacturing equipment.

### Brief Description of Drawings

The present invention together with the above-mentioned and other objects and advantages may best be understood from the following detailed description of the embodiments, but not restricted to the embodiments, wherein is shown in:
Figure 1 is an isometric view of a housing for an assembly set for a venting unit for venting an electronics housing, in particular a battery housing, according to an embodiment of the invention;
Figure 2 is a top view of the housing according to Fig. 1;
Figure 3 is a cut view of the housing according to the section plane B-B of Fig. 2;
Figure 4 is an isometric view of a housing according to a further embodiment of the invention;
Figure 5 is a top view of the housing according to Fig. 4;
Figure 6 is a cut view of the housing according to the section plane A-A of Fig. 5;
Figure 7 is an isometric view of an inlet for an assembly set for a venting unit for venting an electronics housing, in particular a battery housing, according to an embodiment of the invention;
Figure 8 is a top view of the inlet according to Fig. 7;
Figure 9 is a bottom view of the inlet according to Fig. 7;
Figure 10 is a cut view of the inlet according to the section plane A-A of Fig. 8;
Figure 11 is an isometric view of an inlet of a venting unit according to a further embodiment of the invention;
Figure 12 is a top view of the inlet according to Fig. 11;
Figure 13 is a bottom view of the inlet according to Fig. 11;
Figure 14 is a cut view of the inlet according to the section plane A-A of Fig. 12;
Figure 15 is an isometric view of an inlet of a venting unit according to a further embodiment of the invention;
Figure 16 is a top view of the inlet according to Fig. 15;
Figure 17 is a bottom view of the inlet according to Fig. 15;
Figure 18 is a cut view of the inlet according to the section plane E-E of Fig. 16;
Figure 19 is an isometric view of an inlet of a venting unit according to a further embodiment of the invention;
Figure 20 is a top view of the inlet according to Fig. 19;
Figure 21 is a bottom view of the inlet according to Fig. 19;
Figure 22 is a cut view of the inlet according to the section plane A-A of Fig. 20;
Figure 23 is an isometric view of an inlet of a venting unit according to a further embodiment of the invention;
Figure 24 is a top view of the inlet according to Fig. 23;
Figure 25 is a bottom view of the inlet according to Fig. 23;
Figure 26 is a cut view of the inlet according to the section plane B-B of Fig. 24;
Figure 27 is an isometric view of an inlet of a venting unit according to a further embodiment of the invention;
Figure 28 is a top view of the inlet according to Fig. 27;
Figure 29 is a bottom view of the inlet according to Fig. 27;
Figure 30 is a cut view of the inlet according to the section plane A-A of Fig. 29;
Figure 31 is an isometric view of an inlet of a venting unit according to a further embodiment of the invention;
Figure 32 is a top view of the inlet according to Fig. 31;
Figure 33 is a bottom view of the inlet according to Fig. 31;
Figure 34 is a cut view of the inlet according to the section plane A-A of Fig. 32;
Figure 35 is an isometric view of a venting unit for an assembly set for a venting unit assembled from an assembly set for a venting unit for venting an electronics housing, in particular a battery housing, according to an embodiment of the invention;
Figure 36 is a top view of the venting unit according to Fig. 35;
Figure 37 is a cut view of the venting unit according to the section plane B-B of Fig. 36;
Figure 38 is an isometric view of a venting unit according to a further embodiment of the invention;
Figure 39 is a top view of the venting unit according to Fig. 38;
Figure 40 is a cut view of the venting unit according to the section plane A-A of Fig. 39;
Figure 41 is an isometric view of a venting unit according to a further embodiment of the invention;
Figure 42 is a top view of the venting unit according to Fig. 41;
Figure 43 is a cut view of the venting unit according to the section plane C-C of Fig. 42;
Figure 44 is an isometric view of a venting unit according to a further embodiment of the invention;
Figure 45 is a top view of the venting unit according to Fig. 44;
Figure 46 is a cut view of the venting unit according to the section plane E-E of Fig. 45;
Figure 47 is an isometric view of a venting unit according to a further embodiment of the invention;
Figure 48 is a top view of the venting unit according to Fig. 47;
Figure 49 is a cut view of the venting unit according to the section plane A-A of Fig. 48;
Figure 50 is an isometric view of a venting unit according to a further embodiment of the invention;
Figure 51 is a top view of the venting unit according to Fig. 50;
Figure 52 is a cut view of the venting unit according to the section plane A-A of Fig. 51;
Figure 53 is an isometric view of a venting unit according to a further embodiment of the invention;
Figure 54 is a top view of the venting unit according to Fig. 53;
Figure 55 is a cut view of the venting unit according to the section plane A-A of Fig. 54;
Figure 56 is an isometric view of a venting unit according to a further embodiment of the invention;
Figure 57 is a top view of the venting unit according to Fig. 56;
Figure 58 is a cut view of the venting unit according to the section plane A-A of Fig. 57;
Figure 59 is an isometric view of a venting unit according to a further embodiment of the invention;
Figure 60 is a top view of the venting unit according to Fig. 59; and
Figure 61 is a cut view of the venting unit according to the section plane B-B of Fig. 60.

### Detailed Description

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

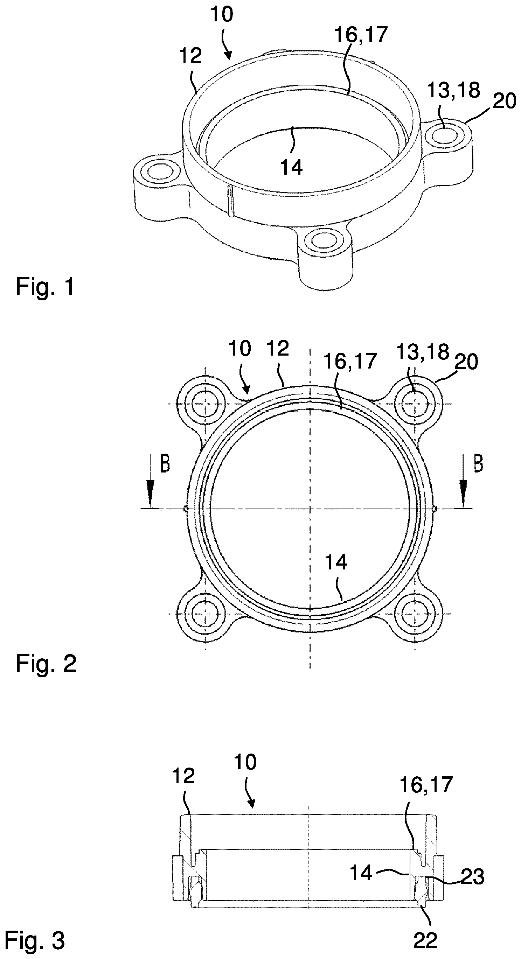

Figure 1 depicts an isometric view of a housing 10 for an assembly set for a venting unit 100 for venting an electronics housing, in particular a battery housing, according to an embodiment of the invention. Figure 2 depicts a top view of the housing 10, whereas in Figure 3 a cut view of the housing 10 according to the section plane B-B of Figure 2 is shown.

The housing 10 at least comprises a base body 12 with fixation means 13 for connecting to a pressure compensation and/or degassing opening of the electronics housing (not shown). The fixation means 13 of the embodiment shown in the Figures 1 to 3 are pass-through bushings 18, which are arranged in four mounting pods 20. For simplification reference numerals are only marked at one mounting pod 20. Thus, the housing 10 may be fixed to the electronics housing by mounting bolts.

The base body 12 comprises an inner opening 14 for gas passage, which is fluidly connected to a gas passage opening of the electronics housing when the housing 10 is mounted to electronics housing.

The base body 12 further comprises at least one receptacle 16 configured as an interface for an inlet body 32 of an inlet 30 to be arranged in the inner opening 14. in the embodiment shown the receptacle 16 is configured as a circumferential ring 17 inside the base body 12.

At a lower side of the base body 12, which is to be mounted to the electronics housing, a circumferential seal 22 is arranged in a groove 23 of the base body 12.

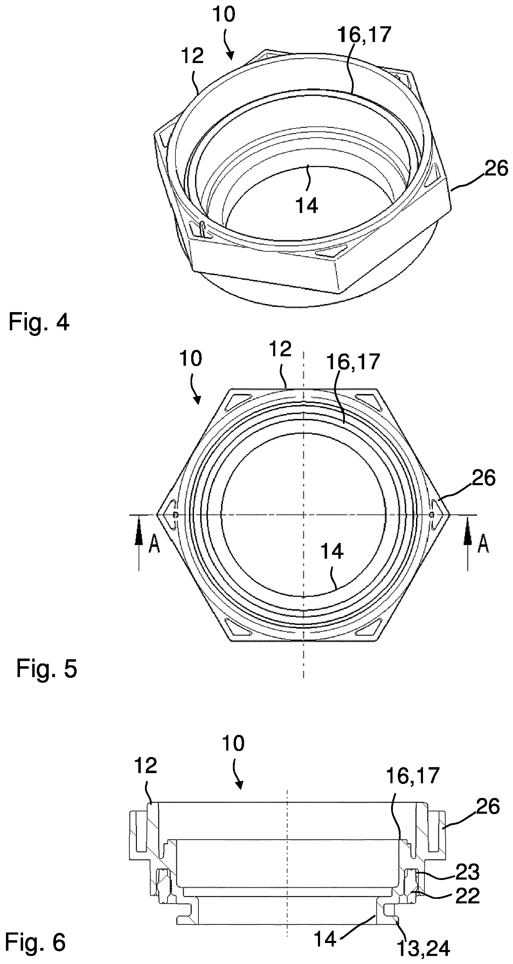

Figure 4 depicts an isometric view of a housing 10 of a venting unit 100 according to a further embodiment of the invention. Figure 5 depicts a top view of the housing 10, whereas in Figure 6 a cut view of the housing 10 according to the section plane A-A of Figure 5 is shown.

The interface of the housing 10 to an inlet body 32 of an inlet 30 is identical to the interface of the housing 10 shown in Figures 1 to 3. At least one receptacle 16 is arranged in the inner opening 14 of the base body 12. The receptacle 16 is also configured as a circumferential ring 17 inside the base body 12.

Fixation means 13 for connecting to a pressure compensation and/or degassing opening of the electronics housing is a bayonet fixation means 24 in this case which serves for a reproducible fixation if the electronic housing exhibits corresponding fixation means. A circumferential seal 22 is also arranged in a groove 23 of the base body 12. For mounting the base body 12 comprises a flange for a suitable tool, which is designed in the embodiment shown as a hexagonal flange 26.

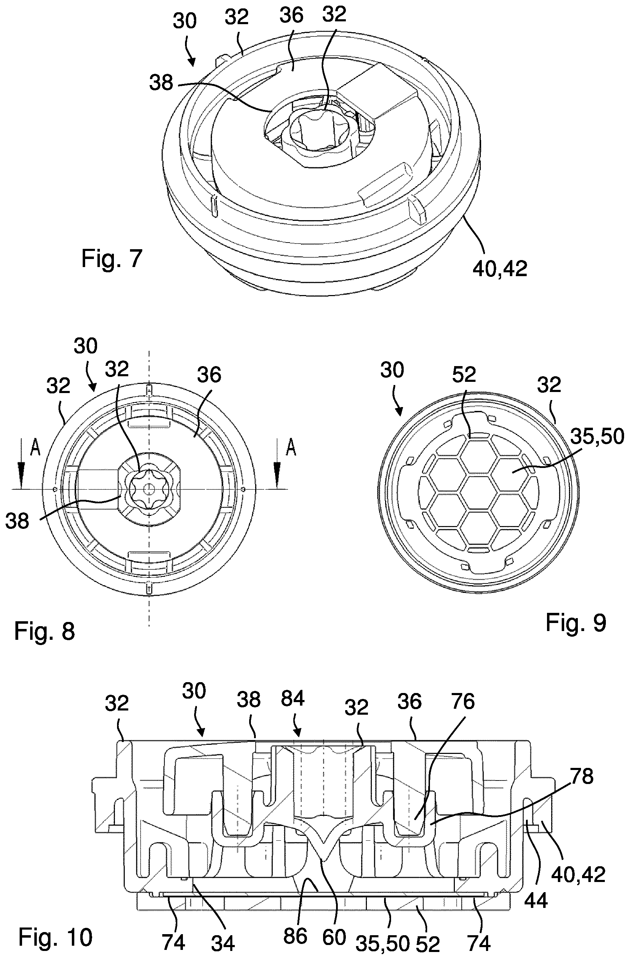

Figure 7 depicts an isometric view of an inlet 30 for an assembly set for a venting unit 100 for venting an electronics housing, in particular a battery housing, according to an embodiment of the invention. Figure 8 depicts a top view of the inlet 30, whereas in Figure 9 a bottom view of the inlet 30 is shown. Figure 10 depicts a cut view of the inlet 30 according to the section plane A-A of Figure 8.

The inlet 30 shown in Figures 7 to 10 exhibits the functions pressure compensation and degassing due to emergency venting of the electronics housing, as e.g. in a battery housing.

The inlet 30 at least comprises an inlet body 32 comprising at least one inlet opening 34 and being configured to be inserted in an inner opening 14 of the base body 12 of the housing 10 as e.g. depicted in Figures 1 to 6. The inlet 30 is further configured to cover the inner opening 14 of the base body 12 in a water-tight manner.

The inlet body 32 comprises at least one counter-receptacle 40 configured to be connected to at least one corresponding receptacle 16 of the base body 12 of the housing 10. in the embodiment shown, the counter-receptacle 40 of the inlet 30 is configured as a circumferential flange 42 with a circumferential groove 44, on an outer circumference of the inlet 30. Thus, the circumferential ring 17 as the receptacle 16 of the housing 10 may favorably be received by the flange 42 in an intended mounting position.

The inlet 30 comprises means 35 for pressure compensation and/or degassing of the electronics housing covering the inlet opening 34. in the embodiment shown in Figures 7 to 10 the means 35 comprise a semipermeable membrane 50 enabling passage of gaseous media from an environment into the electronics housing and from the electronics housing to the environment, but preventing passage of liquid media and solids.

The semipermeable membrane 50 may be provided in the form of a microporous film, comprising in particular a fluoropolymer, in particular a polytetrafluoroethylene. Such a membrane 50 is suitably permeable to air but sufficiently watertight and also reliably prevents particles up to a certain degree of fineness from passing through it.

The semipermeable membrane 50 is supported by a support element 52 against pressure to an outer side 86 of the membrane 50. Outer side 86 in this sense means towards the outer environment. Such a pressure may be exerted to the membrane 50, e.g., by a water leakage test of the electronics housing. The support element 52 is arranged at the inlet body 32 between the semipermeable membrane 50 and the electronics housing.

As can be seen from Figure 9, the support element 52 may be configured as a grid-like support element for gas passage, e.g. in a honeycomb-like design.

An inlet cover 36 is arranged at an outer side 84 of the inlet body 32. The inlet cover 36 comprises guiding means 76 for connecting to counter guiding means 78 of the inlet body 32.

Further, a spike element 60 is arranged at the inlet body 32 on an outer side 86 of the semipermeable membrane 50. The spike element 60 is configured to rupture the semipermeable membrane 50 in case of an excessive overpressure inside the electronics housing. The overpressure causes the membrane 50 to bend towards the outer side 86 and finally presses the membrane 50 towards the spike element 60. Thus the membrane 50 may be perforated and ruptured by the spike element 60. The inlet cover 36 exhibits a central cover opening 38 for gas passage in the central region of the inlet 30 where the spike element 60 is arranged at the inlet body 32.

The semipermeable membrane 50 may be fixed to the inlet body 32 by welding, in particular by ultrasonic welding. Welding joints 74 may favorably be arranged radially outside the inlet opening 34.

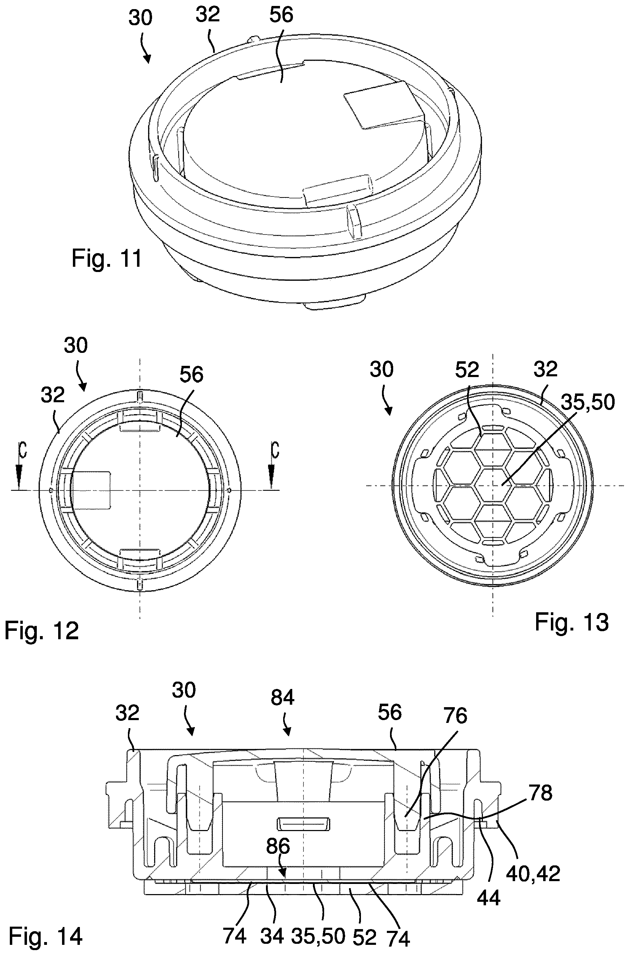

Figure 11 depicts an isometric view of an inlet 30 of a venting unit 100 according to a further embodiment of the invention. Figure 12 depicts a top view of the inlet 30, whereas in Figure 13 a bottom view of the inlet 30 is shown. Figure 14 depicts a cut view of the inlet 30 according to the section plane A-A of Figure 12.

This inlet 30 is intended for pressure compensation only. So there is no spike element 60 for rupturing the semipermeable membrane 50 as in the previous embodiment.

The interface of the inlet body 32 for mounting to a housing 10 is the same as in the previous embodiment.

The inlet body 32 is equipped with an inlet opening 34 with a relatively small diameter. Thus, in principle only a small semipermeable membrane 50 is needed for this embodiment. As the central region of the inlet body 32 exhibits an open space a protection cover 56 is arranged at an outer side 84 of the inlet body 32, which covers the whole membrane 50. Gas passage is sideways under the protection cover 56 and is not to be seen in the Figures. The protection cover 56 comprises guiding means 76 for connecting to counter guiding means 78 of the inlet body 32.

The semipermeable membrane 50 is also supported by a support element 52 against pressure to an outer side 86 of the membrane 50.

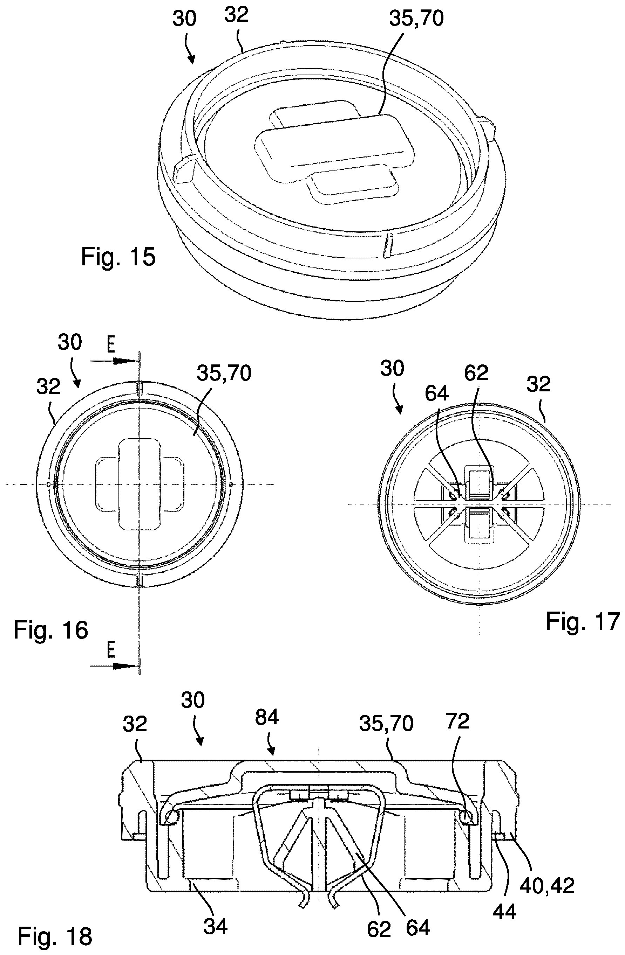

Figure 15 depicts an isometric view of an inlet 30 of a venting unit 100 according to a further embodiment of the invention. Figure 16 depicts a top view of the inlet 30, whereas in Figure 17 a bottom view of the inlet 30 is shown. Figure 18 depicts a cut view of the inlet 30 according to the section plane E-E of Figure 16.

This inlet 30 is intended for degassing due to emergency venting of the electronics housing only.

For this purpose, the means 35 for pressure compensation and/or degassing of the electronics housing comprise a burst cover 70 covering the inlet opening 34. The burst cover 70 is configured to open a gas passage in case of an excessive overpressure inside the electronics housing.

For fixing the burst cover 70 to the inlet body 32, the burst cover 70 comprises a spring element 62 which may be snapped around a connection element 64 being part of the inlet body 32. Due to the section plane in Figure 18 the connection between the spring element 62 and the burst cover 70 is not to be seen, as well as the connection between the connection element 64 and the inlet body 32.

The burst cover 70 is sealed against the inlet body 32 by a circumferential seal 72, e.g. an O-ring. By snapping the burst cover 70 with the spring element 62 onto the connection element 64 of the inlet body 32 the outer edge of the burst cover 70 is pressed onto the circumferential seal 72. Thus the burst cover 70 tightly seals the inlet opening 34 of the inlet 30.

In case of an overpressure inside the electronics housing the burst cover 70 is pressed in the direction towards the outer side 84. If the force exerted on the spring element 62 exceeds a certain limit the spring element 62 opens and glides over the connection element 64. Thus the burst cover 70 may be blown away from the inlet body 32 and the gas passage through the inlet opening 34 is open.

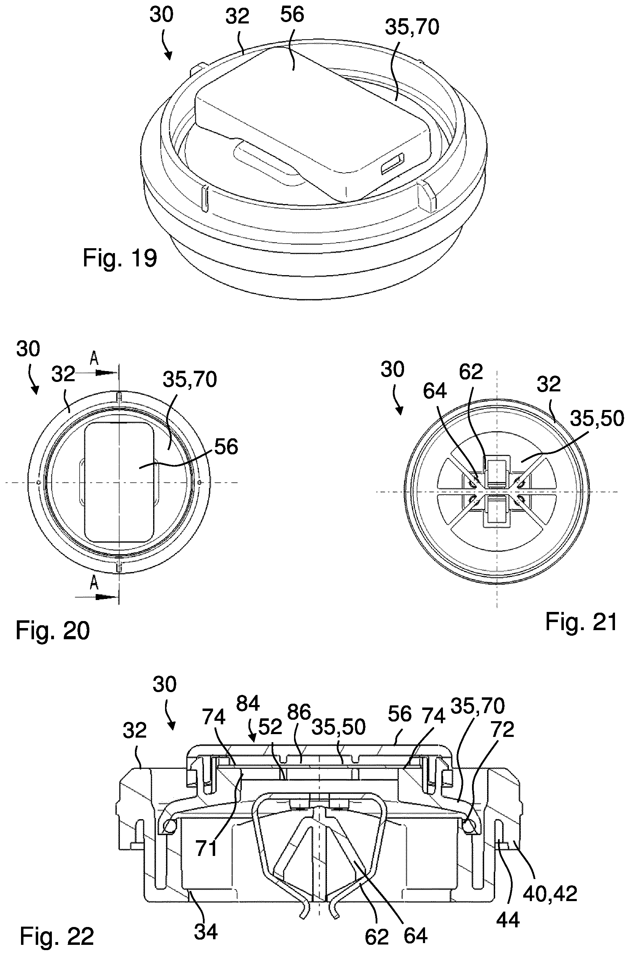

Figure 19 depicts an isometric view of an inlet 30 of a venting unit 100 according to a further embodiment of the invention. Figure 20 depicts a top view of the inlet 30, whereas in Figure 21 a bottom view of the inlet 30 is shown. Figure 22 depicts a cut view of the inlet 30 according to the section plane A-A of Figure 20.

This inlet 30 is intended for pressure compensation and degassing. For pressure compensation a semipermeable membrane 50 is foreseen and for degassing a burst cover 70 similar to the embodiment shown in Figures 15 to 18 is used.

The burst cover 70 is mounted to the inlet body 32 in the same way as in the previous embodiment with the spring element 62 fixed to the connection element 64 and with the circumferential seal 72.

Yet in this embodiment the burst cover 70 is configured with a cover opening 71 which is covered by the semipermeable membrane 50. The membrane 50 may be welded, e.g. by ultrasonic welding to the circumference of the cover opening 71 on welding joints 74.

The semipermeable membrane 50 is supported by a support element 52 against pressure to the outer side 86 of the membrane 50. The support element 52 in this case may be fixed to the burst cover 70.

in this embodiment, there is no need for a spike element, as for degassing the whole burst cover 70 with the semipermeable membrane 50 is blown away, thus opening the inlet opening 34 for degassing.

Further, a protection cover 56 is arranged at the burst cover 70 on an outer side 86 of the semipermeable membrane 50 for protection of the membrane 50 against particles and mechanical damage from the environment. The protection cover 56 may be clipped to the burst cover 70 for fixation. As can be seen from Figures 19 and 20 the protection cover 56 is shaped rectangular-like which may correspond favorably to the shape of the membrane 50.

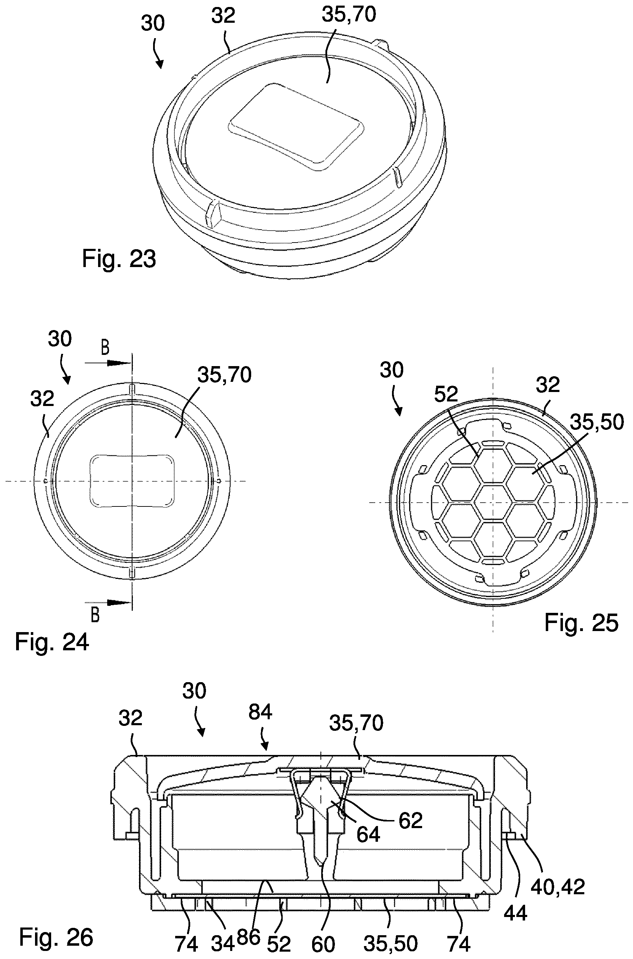

Figure 23 depicts an isometric view of an inlet 30 of a venting unit 100 according to a further embodiment of the invention. Figure 24 depicts a top view of the inlet 30, whereas in Figure 25 a bottom view of the inlet 30 is shown. Figure 26 depicts a cut view of the inlet 30 according to the section plane B-B of Figure 24.

This inlet 30 is also intended for pressure compensation and degassing.

There is a semipermeable membrane 50 arranged as in the first embodiment shown in Figures 7 to 10. For rupturing the membrane 50 in case of overpressure from the electronics housing a spike element 60 is arranged at the inlet body 32. A support element 52 is arranged at the inlet opening 34 for supporting the membrane 50 against pressure to the outer side 86 of the membrane 50.

Further a burst cover 70 is arranged on the outer side 84 of the inlet body 32. The burst cover 70 is fixed to the inlet body 32 in the same manner as in the previous embodiments with the spring element 62 arranged at the burst cover 70 and cooperating with the connection element 64 arranged at the inlet body 32. There may be a gap between the outer edge of the burst cover 70 and the inlet body 32 as a gas passage for pressure compensation.

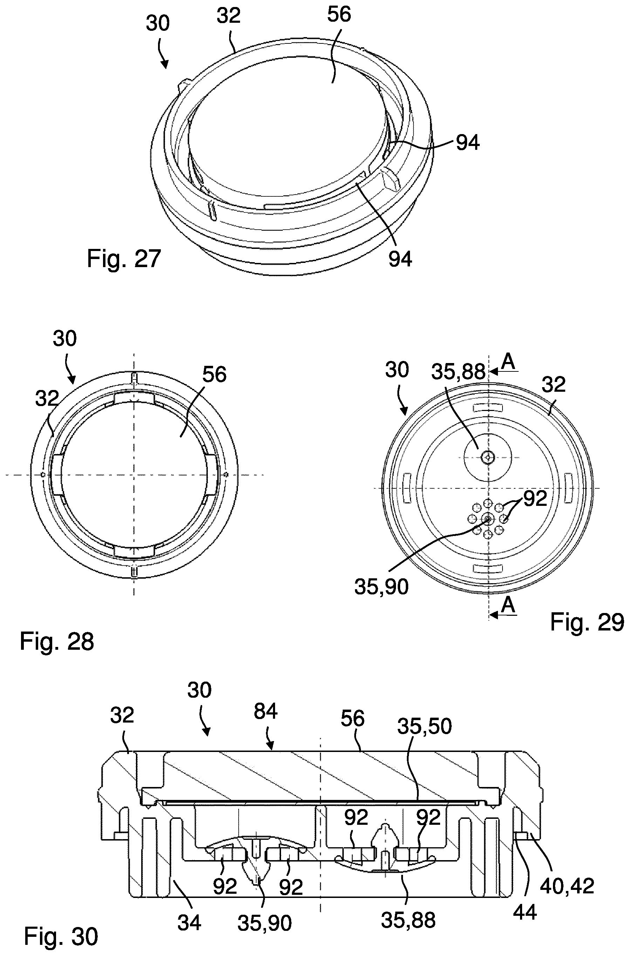

Figure 27 depicts an isometric view of an inlet 30 of a venting unit 100 according to a further embodiment of the invention. Figure 28 depicts a top view of the inlet 30, whereas in Figure 29 a bottom view of the inlet according to Fig. 27 is shown. Figure 30 depicts a cut view of the inlet 300 according to the section plane A-A of Fig. 29.

The inlet 30 is intended for pressure compensation only.

in this embodiment, the means 35 for pressure compensation and/or degassing of the electronics housing comprise at least a first valve 88 for gas passage into the electronics housing, at least a second valve 90 for gas passage out of the electronics housing and a semipermeable membrane 50. The semipermeable membrane 50 is arranged between the outer side 84 of the inlet body 32 and the at least one first valve 88 and at least one second valve 90. in particular, the at least one first valve 88 and at least one second valve 90 may be configured as mushroom valves as is shown in Figure 30. Both valves 88, 90 may favorably be manufactured from plastics. The semipermeable membrane 50 prevents water from entering into the electronics housing.

in the bottom view in Figure 29 the first valve 88 is shown from a top view on the valve member, whereas from the second valve 90 only the venting holes 92 are to be seen. In Figure 30 the venting holes 92 are cut and are to be seen for both valves 88, 90. The protection cover 56 protects the semipermeable membrane 50. For gas passage the protection cover 56 exhibits venting openings 94 around a circumference (see Figure 27).

Advantageously, the at least one first valve 88 may open if the air pressure in the environment is higher than the air pressure inside the electronics housing and the at least one second valve 90 may open if the air pressure in the environment is lower than the air pressure inside the electronics housing. Entrance of water may be prevented by the semipermeable membrane 50.

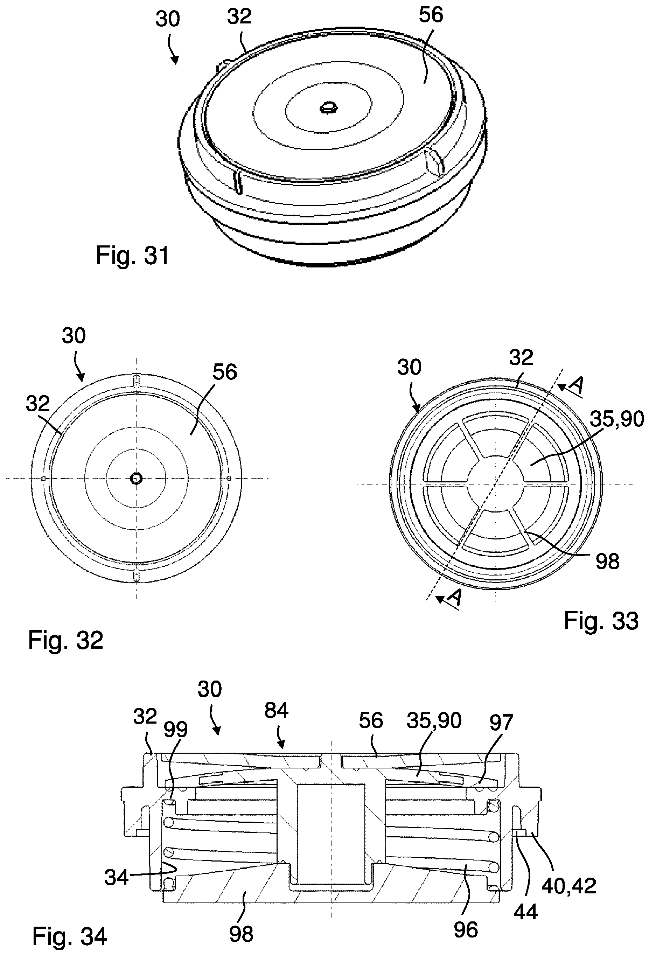

Figure 31 depicts an isometric view of an inlet 30 of a venting unit 100 according to a further embodiment of the invention. Figure 32 depicts a top view of the inlet 30, whereas in Figure 33
a bottom view of the inlet according to Fig. 31 is shown. Figure 34 depicts a cut view of the inlet 30 according to the section plane A-A of Fig. 33.

The inlet 30 shown in Figures 31 to 34 exhibits the functions pressure compensation and degassing due to emergency venting of the electronics housing, as e.g. in a battery housing.

in this embodiment, the means 35 for pressure compensation and/or degassing of the electronics housing comprise at least one second valve 90 for gas passage out of the electronics housing. The at least one second valve 90 is biased against the inlet body 32 with a spring element 96. In particular the at least one second valve 90 is sealed against the inlet body 32 by a circumferential seal 97.

Thus, the at least one second valve 90 may open only for degassing if the pressure inside the electronica housing exceeds a certain limit defined by the spring constant of the spring element 96. Then a large cross section may be used for degassing. Pressure compensation of the venting unit 100 may be achieved by the circumferential seal 97 which may be flexible in a low pressure range with the at least one second valve 90 closed.

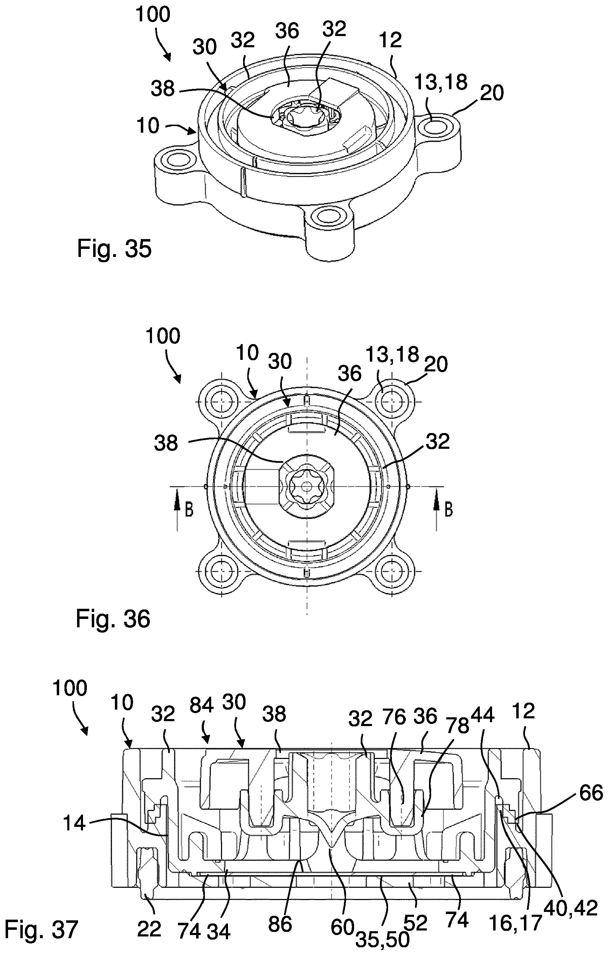

Figure 35 depicts an isometric view of a venting unit 100 for venting an electronics housing, in particular a battery housing, assembled from an assembly set for a venting unit 100 according to an embodiment of the invention. Figure 36 depicts a top view of the venting unit 100, whereas in Figure 37 a cut view of the venting unit 100 according to the section plane B-B of Figure 36 is shown.

The venting unit 100 at least comprises a housing 10 comprising a base body 12 with an inner opening 14, the base body 12 comprising fixation means 13 for connecting to a pressure compensation and/or degassing opening of the electronics housing, and an inlet 30, configured to be inserted in the inner opening 14 and covering the inner opening 14 in a water-tight manner. The inlet 30 comprises an inlet body 32 with at least one inlet opening 34 covered by means 35 for pressure compensation and/or degassing of the electronics housing. The housing 10 comprises at least one receptacle 16 configured as an interface for the inlet body 32. The inlet body 32 comprises at least one corresponding counter-receptacle 40 configured to be connected to the receptacle 16.

According to an embodiment of the invention, the housing 10 and the inlet 30 of the venting unit 100 may be chosen from an assembly set for a venting unit 100 for venting an electronics housing, in particular a battery housing. The assembly set may advantageously comprise different types of housings 10 and inlets 30.

in the embodiment shown in Figures 35 to 37 the housing 10 corresponds to the housing 10 described in Figures 1 to 3 and the inlet 30 corresponds to the inlet 30 described in Figures 7 to 10. The housing 10 is configured to be fixed to the electronics housing bypass-through bushings 18, which are arranged in four mounting pods 20.

The inlet 30 exhibits the functions pressure compensation and degassing due to emergency venting of the electronics housing, as e.g. in a battery housing. For this purpose the inlet 30 comprises a semipermeable membrane 50 which may be ruptured by a spike element 60 in case of an overpressure in the electronics housing. An inlet cover 36 with a central cover opening 38 is arranged covering the inlet body 32 at least partially.

For assembling the venting unit 100 the inlet body 32 is mounted to the housing wherein the flange 42 as a counter-receptacle 40 of the inlet 30 are joined to the ring 17 as a receptacle 16 of the base body 12. The receptacle 16 of the base body 12 and the corresponding counter-receptacle 40 of the inlet 30 may be connected by welding, in particular spin welding, at the welding joint 66.

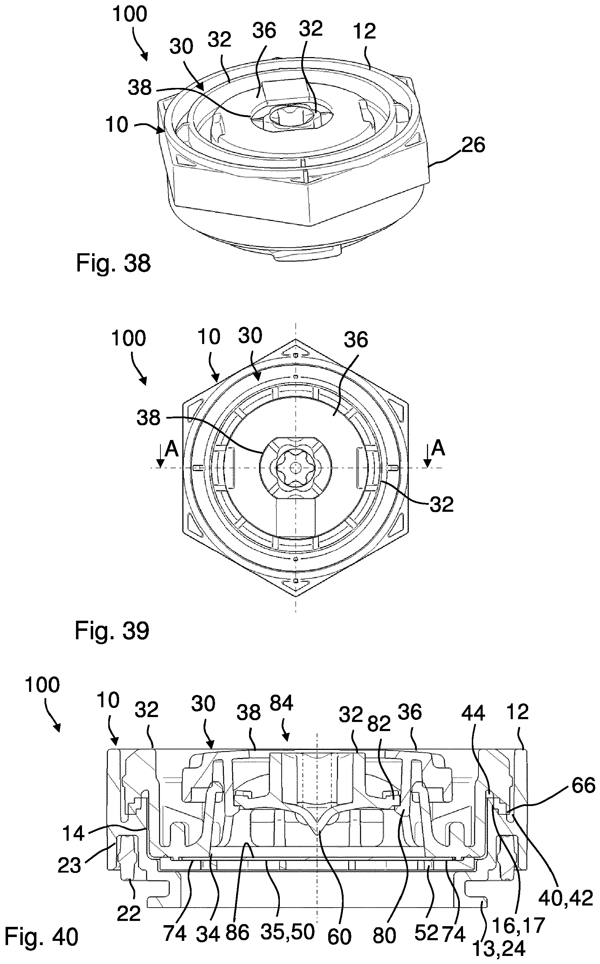

Figure 38 depicts an isometric view of a venting unit 100 according to a further embodiment of the invention. Figure 39 depicts a top view of the venting unit 100, whereas in Figure 40 a cut view of the venting unit 100 according to the section plane A-A of Figure 39 is shown.

in the embodiment shown in Figures 38 to 40 the housing 10 corresponds to the housing 10 described in Figures 4 to 6, whereas the inlet 30 is the same as in Figures 7 to 10.

Fixation means 13 of the housing 10 for connecting to a pressure compensation and/or degassing opening of the electronics housing is a bayonet fixation means 24 in this case which serves for a reproducible fixation if the electronic housing exhibits corresponding fixation means. A circumferential seal 22 is arranged in a groove 23 of the base body 12. For mounting the base body 12 comprises a flange for a suitable tool, which is designed in the embodiment shown as a hexagonal flange 26.

The inlet 30 is also fixed to the housing 10 in the same way as for the embodiment shown in Figures 35 to 37 by welding, in particular spin welding, at the welding joint 66.

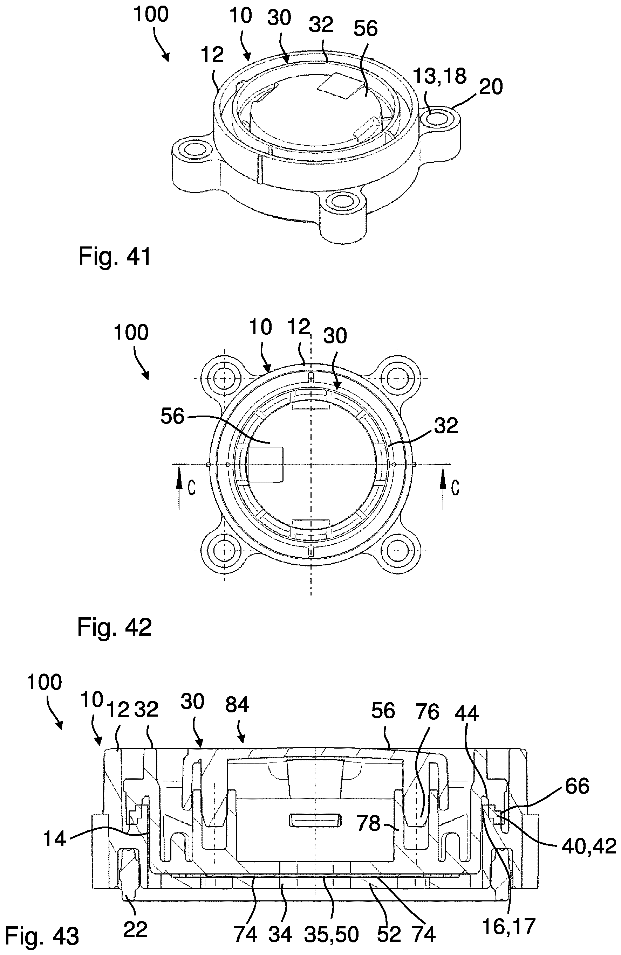

Figure 41 depicts an isometric view of a venting unit 100 according to a further embodiment of the invention. Figure 42 depicts a top view of the venting unit 100, whereas in Figure 43 a cut view of the venting unit 100 according to the section plane C-C of Figure 42 is shown.

in the embodiment shown in Figures 41 to 43 the housing 10 corresponds to the housing 10 described in Figures 1 to 3, whereas as an inlet 30 a different type is chosen. The inlet 30 corresponds to the inlet 30 described in Figures 11 to 14. The housing 10 is configured to be fixed to the electronics housing by pass-through bushings 18, which are arranged in four mounting pods 20.

This inlet 30 is intended for pressure compensation only. So there is no spike element 60 for rupturing the semipermeable membrane 50 as in the previous embodiment. For this purpose the inlet body 32 is equipped with an inlet opening 34 with a relatively small diameter. A protection cover 56 is arranged at an outer side 84 of the inlet body 32, which covers the whole membrane 50.

The inlet 30 is also fixed to the housing 10 by welding, in particular spin welding, at the welding joint 66.

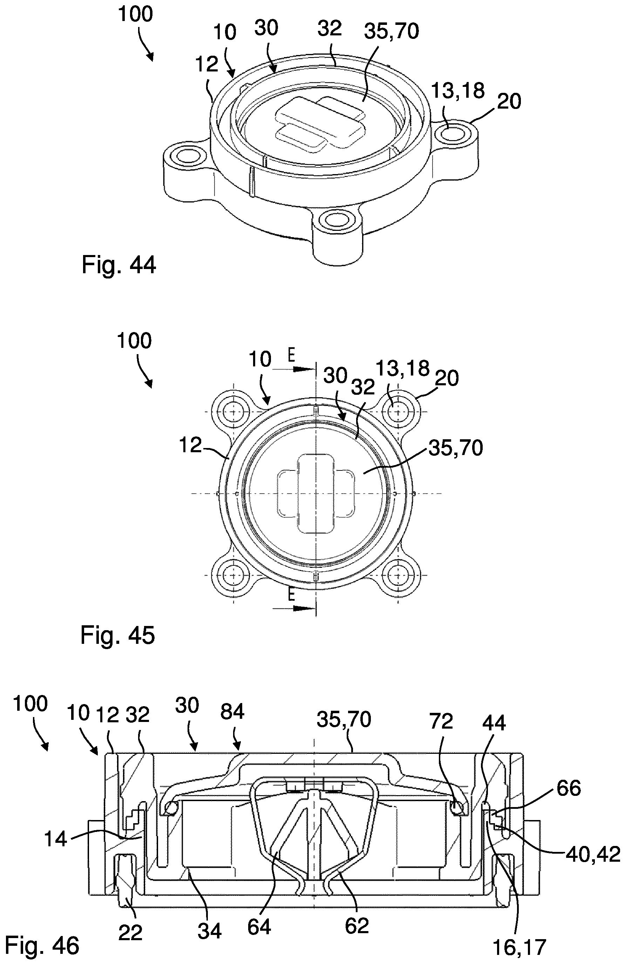

Figure 44 depicts an isometric view of a venting unit 100 according to a further embodiment of the invention. Figure 45 depicts a top view of the venting unit 100, whereas in Figure 46 a cut view of the venting unit 100 according to the section plane E-E of Figure 45 is shown.

in the embodiment shown in Figures 44 to 46 the housing 10 corresponds to the housing 10 described in Figures 1 to 4, whereas as an inlet 30 a different type is chosen. The inlet 30 corresponds to the inlet 30 described in Figures 15 to 18. The housing 10 is configured to be fixed to the electronics housing by pass-through bushings 18, which are arranged in four mounting pods 20.

This inlet 30 is intended for degassing due to emergency venting of the electronics housing only.

For this purpose, the means 35 for pressure compensation and/or degassing of the electronics housing comprise a burst cover 70 covering the inlet opening 34. The burst cover 70 is configured to open a gas passage in case of an excessive overpressure inside the electronics housing.

in case of an overpressure inside the electronics housing the burst cover 70 is pressed in the direction towards the outer side 84. if the force exerted on the spring element 62 exceeds a certain limit the spring element 62 opens and glides over the connection element 64. Thus the burst cover 70 may be blown away from the inlet body 32 and the gas passage through the inlet opening 34 is open.

The inlet 30 is also fixed to the housing 10 by welding, in particular spin welding, at the welding joint 66.

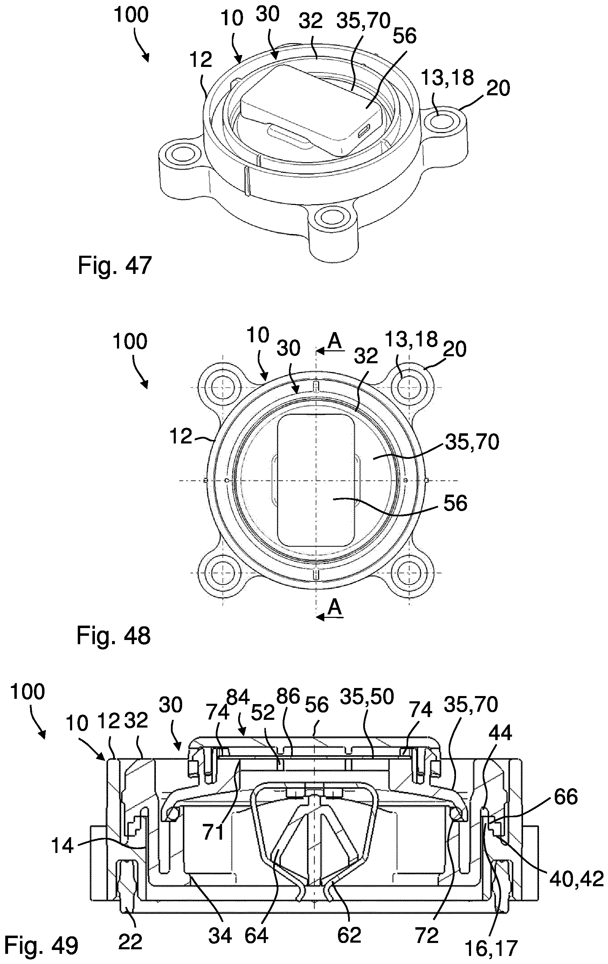

Figure 47 depicts an isometric view of a venting unit according to a further embodiment of the invention. Figure 48 depicts a top view of the venting unit, whereas in Figure 49 a cut view of the venting unit according to the section plane A-A of Figure 48 is shown.

in the embodiment shown in Figures 47 to 49 the housing 10 corresponds to the housing 10 described in Figures 1 to 4, whereas as an inlet 30 a different type is chosen. The inlet 30 corresponds to the inlet 30 described in Figures 19 to 22. The housing 10 is configured to be fixed to the electronics housing bypass-through bushings 18, which are arranged in four mounting pods 20.

This inlet 30 is intended for pressure compensation and degassing. For pressure compensation a semipermeable membrane 50 is foreseen and for degassing a burst cover 70 is used.

The burst cover 70 is mounted to the inlet body 32 with the spring element 62 fixed to the connection element 64 and with the circumferential seal 72.

The burst cover 70 is configured with a cover opening 71 which is covered by the semipermeable membrane 50. The membrane 50 may be welded, e.g. by ultrasonic welding to the circumference of the cover opening 71 on welding joints 74.

The semipermeable membrane 50 is supported by a support element 52 against pressure to the outer side 86 of the membrane 50. The support element 52 in this case may be fixed to the burst cover 70.

in this embodiment, there is no need for a spike element, as for degassing the whole burst cover 70 with the semipermeable membrane 50 is blown away, thus opening the inlet opening 34 for degassing.

Further, a protection cover 56 is arranged at the burst cover 70 on an outer side 86 of the semipermeable membrane 50 for protection of the membrane 50 against particles and mechanical damage from the environment.

The inlet 30 is also fixed to the housing 10 by welding, in particular spin welding, at the welding joint 66.

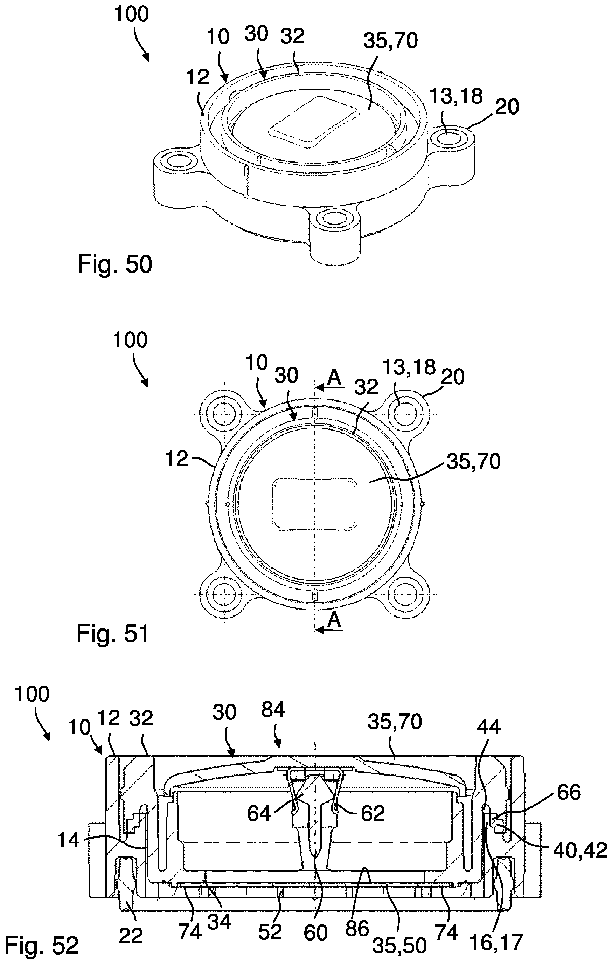

Figure 50 depicts an isometric view of a venting unit according to a further embodiment of the invention. Figure 51 depicts a top view of the venting unit, whereas in Figure 52 a cut view of the venting unit according to the section plane A-A of Figure 51 is shown.

In the embodiment shown in Figures 50 to 52 the housing 10 corresponds to the housing 10 described in Figures 1 to 4, whereas as an inlet 30 a different type is chosen. The inlet 30 corresponds to the inlet 30 described in Figures 23 to 26. The housing 10 is configured to be fixed to the electronics housing bypass-through bushings 18, which are arranged in four mounting pods 20.

This inlet 30 is also intended for pressure compensation and degassing.

There is a semipermeable membrane 50 arranged as in the first embodiment shown in Figures 7 to 10. For rupturing the membrane 50 in case of overpressure from the electronics housing a spike element 60 is arranged at the inlet body 32. A support element 52 is arranged at the inlet opening 34 for supporting the membrane 50 against pressure to the outer side 86 of the membrane 50.

A burst cover 70 is arranged on the outer side 84 of the inlet body 32. The burst cover 70 is fixed to the inlet body 32 with the spring element 62 arranged at the burst cover 70 and cooperating with the connection element 64 arranged at the inlet body 32.

The inlet 30 is also fixed to the housing 10 by welding, in particular spin welding, at the welding joint 66.

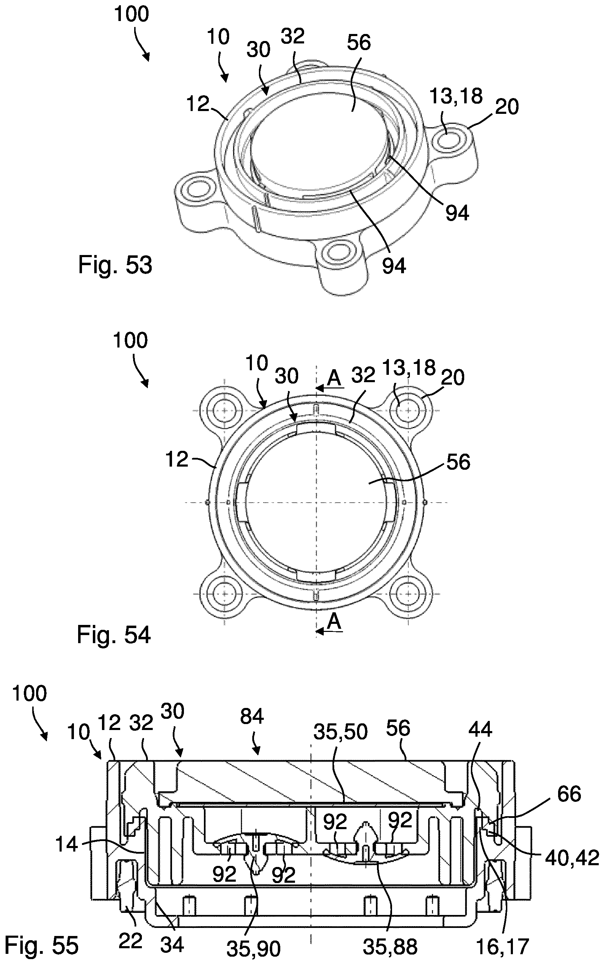

Figure 53 depicts an isometric view of a venting unit according to a further embodiment of the invention. Figure 54 depicts a top view of the venting unit, whereas in Figure 55 a cut view of the venting unit according to the section plane A-A of Figure 54 is shown.

in the embodiment shown in Figures 53 to 55 the housing 10 corresponds to the housing 10 described in Figures 1 to 4, whereas as an inlet 30 a different type is chosen. The inlet 30 corresponds to the inlet 30 described in Figures 27 to 30. The housing 10 is configured to be fixed to the electronics housing bypass-through bushings 18, which are arranged in four mounting pods 20.

This inlet 30 is intended for pressure compensation only.

At least a first valve 88 for gas passage into the electronics housing, at least a second valve 90 for gas passage out of the electronics housing and a semipermeable membrane 50 are arranged inside the inlet body 32 for pressure compensation. The semipermeable membrane 50 is arranged between the outer side 84 of the inlet body 32 and the at least one first valve 88 and at least one second valve 90. The at least one first valve 88 and the at least one second valve 90 are configured as mushroom valves as is shown in Figure 55. Both valves 88, 90 may favorably be manufactured from plastics. The semipermeable membrane 50 prevents water from entering into the electronics housing.

in Figure 55 the venting holes 92 are to be seen in a cut view and are to be seen for both valves 88, 90. The protection cover 56 protects the semipermeable membrane 50. For gas passage the protection cover 56 exhibits venting openings 94 around a circumference (see Figure 53).

Advantageously, the at least one first valve 88 may open if the air pressure in the environment is higher than the air pressure inside the electronics housing and the at least one second valve 90 may open if the air pressure in the environment is lower than the air pressure inside the electronics housing. Entrance of water may be prevented by the semipermeable membrane 50.

The inlet 30 is also fixed to the housing 10 by welding, in particular spin welding, at the welding joint 66.

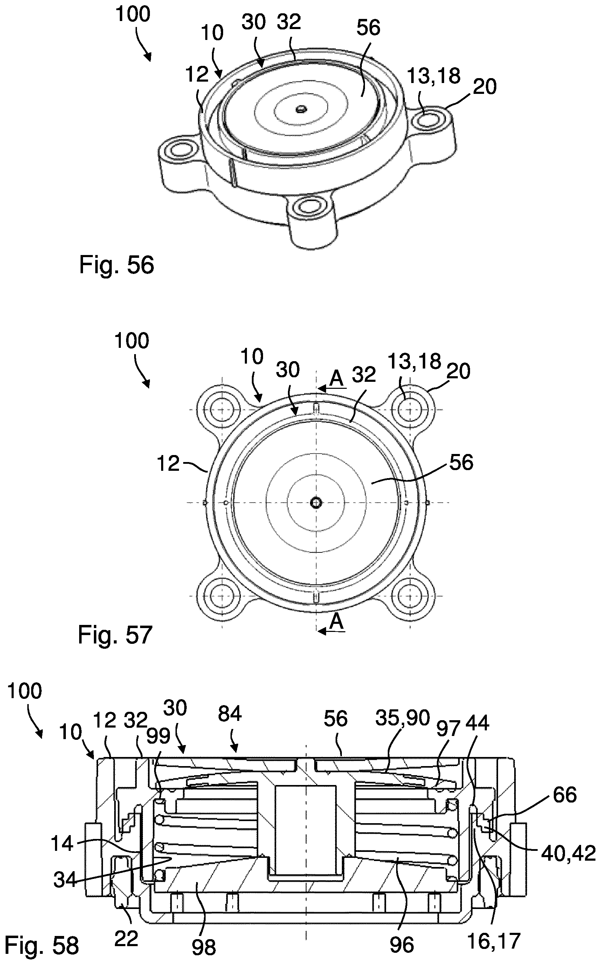

Figure 56 depicts an isometric view of a venting unit according to a further embodiment of the invention. Figure 57 depicts a top view of the venting unit, whereas in Figure 58 a cut view of the venting unit according to the section plane A-A of Figure 57 is shown.

in the embodiment shown in Figures 56 to 58 the housing 10 corresponds to the housing 10 described in Figures 1 to 4, whereas as an inlet 30 a different type is chosen. The inlet 30 corresponds to the inlet 30 described in Figures 31 to 34. The housing 10 is configured to be fixed to the electronics housing bypass-through bushings 18, which are arranged in four mounting pods 20.

This inlet 30 is intended for pressure compensation and degassing.

At least one second valve 90 is configured for gas passage out of the electronics housing. The at least one second valve 90 is biased against the inlet body 32 with a spring element 96. Further, the at least one second valve 90 is sealed against the inlet body 32 by a circumferential seal 97.

Thus, the at least one second valve 90 may open only for degassing if the pressure inside the electronica housing exceeds a certain limit defined by the spring constant of the spring element 96. Then a large cross section of the inlet body 32 may be used for degassing. Pressure compensation of the venting unit 100 may be achieved by the circumferential seal 97 which may be flexible in a low pressure range with the at least one second valve 90 closed.

The inlet 30 is also fixed to the housing 10 by welding, in particular spin welding, at the welding joint 66.

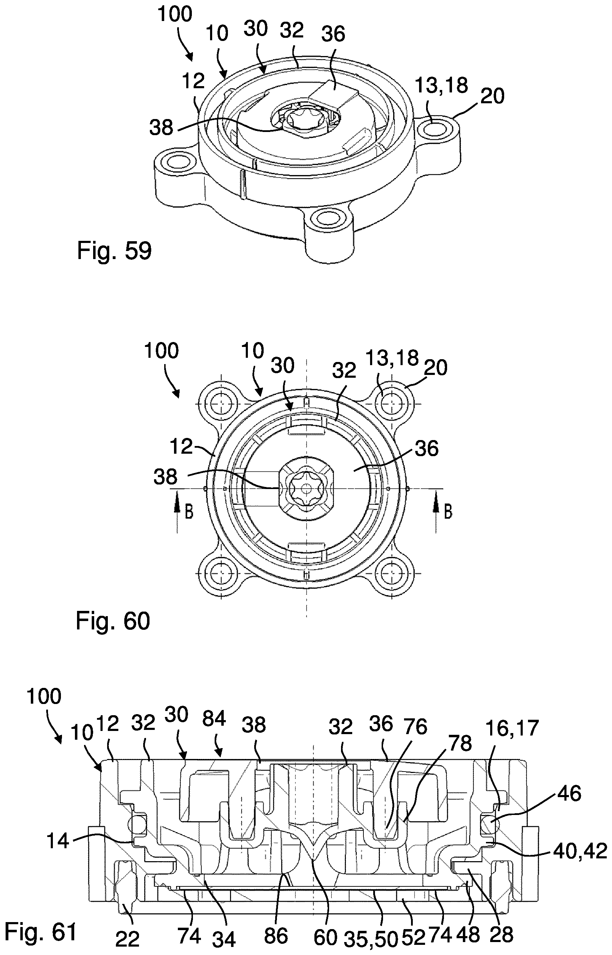

Figure 59 depicts an isometric view of a venting unit according to a further embodiment of the invention. Figure 60 depicts a top view of the venting unit, whereas in Figure 61 a cut view of the venting unit according to the section plane B-B of Figure 60 is shown.

in the embodiment shown in Figures 59 to 61 the housing 10 corresponds, concerning the external interfaces, to the housing 10 described in Figures 1 to 4, where the housing 10 is configured to be fixed to the electronics housing bypass-through bushings 18, which are arranged in four mounting pods 20.

The inlet 30 corresponds, concerning the venting functions for pressure compensation and/or degassing, to the inlet 30 described in Figures 7 to 10.

The inlet 30 exhibits the functions pressure compensation and degassing due to emergency venting of the electronics housing, as e.g. in a battery housing. For this purpose the inlet 30 comprises a semipermeable membrane 50 which may be ruptured by a spike element 60 in case of an overpressure in the electronics housing. An inlet cover 36 with a central cover opening 38 is arranged covering the inlet body 32 at least partially.

For assembling the venting unit 100 the inlet body 32 is mounted to the housing wherein the flange 42 as a counter-receptacle 40 of the inlet 30 are joined to the ring 17 as a receptacle 16 of the base body 12. Bayonet fixation means 28 are arranged at the housing 10 pointing radially inwards, whereas corresponding bayonet fixation means 48 are arranged at the inlet body 32 pointing radially outwards.

The at least one receptacle 16 of the base body 12 and the at least one corresponding counter-receptacle 40 of the inlet 30 may be connected by turning the inlet 30 relatively to the housing 10 thereby the bayonet fixation means 28, 48 cooperating with each other.

A seal 46 may be arranged between the circumferential ring 17 of the base body 12 and the flange 42 of the inlet 30 for tightly sealing the inlet body 32 against the base body 12 of the housing 10.

### Reference Signs List

- 10: housing
- 12: base body
- 13: fixation means
- 14: inner opening
- 16: receptacle
- 17: ring
- 18: bushing
- 20: mounting pod
- 22: seal
- 23: groove
- 24: bayonet fixation means
- 26: hexagonal flange
- 28: bayonet fixation means
- 30: inlet
- 32: inlet body
- 34: inlet opening
- 35: means for pressure compensation and/or degassing
- 36: inlet cover
- 38: cover opening
- 40: counter-receptacle
- 42: flange
- 44: groove
- 46: seal
- 48: bayonet fixation means
- 50: semipermeable membrane
- 52: support element
- 56: protection cover
- 60: spike element
- 62: spring element
- 64: connection element
- 66: welding joint
- 70: burst cover
- 71: cover opening
- 72: seal
- 74: welding joint
- 76: guiding means
- 78: counter guiding means
- 80: snap element
- 82: counter snap element
- 84: outer side
- 86: outer side
- 88: valve
- 90: valve
- 92: venting hole
- 94: venting opening
- 96: spring element
- 97: seal
- 98: spring support
- 99: counter bearing
- 100: venting unit

## Claims

1. An assembly set for a venting unit (100) for venting an electronics housing, the assembly set comprising
a housing (10) comprising a base body (12) with an inner opening (14), the base body (12) comprising fixation means (13) for connecting to a pressure compensation and/or degassing opening of the electronics housing; and
an inlet (30) configured to be inserted in the inner opening (14) and covering the inner opening (14) in a water-tight manner, the inlet (30) comprising an inlet body (32) with an inlet opening (34) covered by means (35) for pressure compensation and/or degassing of the electronics housing,
wherein the housing (10) further comprises a receptacle (16) configured as an interface for the inlet body (32), and
wherein the inlet body (32) comprises a corresponding counter-receptacle (40) configured to be connected to the receptacle (16).

2. The assembly set according to claim 1, wherein the receptacle (16) of the base body (12) is a circumferential ring (17) inside the inner opening (14), and
the corresponding counter-receptacle (40) of the inlet (30) is a circumferential flange (42) with a circumferential groove (44) on an outer circumference of the inlet (30), the circumferential ring (17) being configured to be received by the circumferential flange (42) in an intended mounting position.

3. The assembly set according to claim 1 or 2, wherein the receptacle (16) of the base body (12) and the corresponding counter-receptacle (40) of the inlet (30) are connected by spin welding.

4. The assembly set according to claim 1 or 2, wherein the receptacle (16) of the base body (12) and the corresponding counter-receptacle (40) of the inlet (30) are connected by bayonet fixation means (28, 48), and
wherein the assembly set further comprises a seal (46) arranged between the circumferential ring (17) of the base body (12) and the circumferential flange (42) of the inlet (30).

5. The assembly set according to any one of the previous claims, wherein the housing (10) is attached to the electronics housing by pass-through bushings (18).

6. The assembly set according to any one of the claims 1 to 4, wherein the housing (10) is attached to the electronics housing by bayonet fixation means (24).

7. The assembly set according to any one of the previous claims, wherein the means (35) for pressure compensation and/or degassing of the electronics housing comprise a semipermeable membrane (50) enabling passage of gaseous media from an environment into the electronics housing and from the electronics housing to the environment, but preventing passage of liquid media and solids.

8. The assembly set according to claim 7, wherein the means (35) for pressure compensation and/or degassing of the electronics housing further comprises a support element (52) supporting the semipermeable membrane (50), the support element (52) being arranged at the inlet body (32) between the semipermeable membrane (50) and the electronics housing, and the support element (52) covering the inlet opening (34).

9. The assembly set according to claim 7 or 8, further comprising a protection cover (56) arranged at an outer side (84) of the inlet body (32).

10. The assembly set according to any one of the claims 7 to 9, wherein the inlet body (32) further comprises a spike element (60) arranged at the inlet body (32) on an outer side (86) of the semipermeable membrane (50), the spike element (60) being configured to rupture the semipermeable membrane (50) in case of an excessive overpressure inside the electronics housing.

11. The assembly set according to any one of the previous claims, wherein the means (35) for pressure compensation and/or degassing of the electronics housing comprise a burst cover (70) covering the inlet opening (34), the burst cover (70) being configured to open a gas passage in case of an excessive overpressure inside the electronics housing.

12. The assembly set according to claim 7 and 11, wherein the semipermeable membrane (50) is arranged at the burst cover (70).

13. The assembly set according to claim 12, wherein the semipermeable membrane (50) is arranged at a cover opening (71) of the burst cover (70), and
wherein a protection cover (56) is arranged on an outer side (86) of the semipermeable membrane (50).

14. The assembly set according to any one of the preceding claims, wherein the means (35) for pressure compensation and/or degassing of the electronics housing comprise a first valve (88) for gas passage into the electronics housing, a second valve (90) for gas passage out of the electronics housing and a semipermeable membrane (50) arranged between the outer side (84) of the inlet body (32) and the first valve (88) and a second valve (90), and
wherein the first valve (88) and the second valve (90) are mushroom valves.

15. The assembly set according to any one of the preceding claims, wherein the means (35) for pressure compensation and/or degassing of the electronics housing comprise a second valve (90) for gas passage out of the electronics housing, the second valve (90) being biased against the inlet body (32) with a spring element (96), and the second valve (90) being sealed against the inlet body (32) by a circumferential seal (97).
